# EUROPEAN PATENT APPLICATION

(11) **EP 1 840 539 A1**
(43) Date of publication of application: **03.10.2007**
(21) Application number: 06075850.5
(22) Date of filing: 31.03.2006
(51) Int. Cl.: G01G 19/02

(54) **Pre-cast concrete structure**

(71) Applicant: Libra Weighing Machines Limited, Sheffield, S21 4EY (GB)
(72) Inventor: Seaton, Steve c/o Libra Weighing Machines, Eckington Sheffield S21 4EY (GB)
(74) Representative: Franks, Robert Benjamin

(57) **Abstract**

A pre-cast structure configured to be installed at a work site. The pre-cast structure is configured to allow a vehicle to access a platform that is also installed at a work site. The invention is characterised in that this pre-cast structure is made from concrete.

## Description

### Field of the Invention

The present invention relates to a pre-cast concrete structure suitable for use at a work site, this pre-cast concrete structure is configurable to allow a vehicle access to a platform when installed.

### Background to the Invention

On a work site it is often necessary for the mechanised vehicles to gain access to a platform for a variety of different purposes. For example there may be provided platforms upon a work site which functions as a weighbridge allowing a vehicle which contains a load of rubble to be weighed both coming into a site and leaving a site so allowing an operator to determine the amount of rubble removed from the site by a vehicle and other vehicles which are subjected to weighing upon this platform.

Another example of a platform on a work site to which a vehicle may require access is a wheel washing station. On a work site the ground conditions are generally poor and this can cause the wheels of a vehicle to become coated in mud and other debris from the work site. It is extremely undesirable and in several countries it is illegal for such a dirty vehicle to return immediately to the road as soon as this vehicle returns to the road it will deposit dirt and debris onto the road surface making road conditions unpredictable for other road users on that particular stretch of road.

In both of the above examples this platform structure be it a weighbridge or wheel washing station is normally positioned at or about the entry point onto the work site so as to allow vehicles upon arriving at the site be weighed if the platform forms part of a weighing mechanism. In both cases so as to allow the vehicle to be either weighed or cleaned prior to exiting the work site onto a public highway.

Given the extensive use of the particular region around the platform, it which is normal practice to provide a reinforced access and entry point to this platform.

Often platforms are raised relative to the ground level in the immediate vicinity. This allows the underside of platform to remain free from debris and other materials so increasing the working life of platform.

Examples of such entry and exit points include steel frames or alternatively concrete structures cast on site to be fit for purpose.

Disadvantages exist with both of these types of prior art structures which allow access to the platform.

Firstly portable steel lamps are extremely expensive to fabricate and care for in comparison to concrete structures which perform the same function as well as steel counterparts.

With respect to concrete structures and which are cast on site, several weeks of work are required prior to completion of such a concrete structure. In particular in order to establish a new concrete access/exit structure it is necessary first to dig out a suitable hole at or adjacent to the site or intended site of the platform. This hole needs then to be lined with hardcore and sand so as to form a substantially level surface. The exact dimensions of a structure are then shuttered and concrete is cast into this shuttered region so as to form the structure. The concrete once cast then requires in general three to four weeks of curing before it is suitable for use by vehicles.

Therefore in order to prepare such a structure so as to allow access by vehicles onto a platform there are several weeks of wait between the inception of the project and its completion.

Other problems associated with this type of on-site cast structure are that if for whatever reason an inadequate amount of concrete is delivered to a work site upon which contractors have been instructed to prepare a concrete structure, additional unsuitable materials may be inserted into the structure so as to make up the required volume. Such additional materials may reduce the overall structure and integrity and general fitness for purpose of the cast structure.

Noting these disadvantages are associated with existing ways of allowing vehicles access to a platform on a work site, the inventors have arrived at a new and inventive solution to this problem which overcomes problems associated with prior art solutions and also provides a number of additional technical advantages over the existing prior art.

### Summary of the Invention

According to a first aspect there is provided a structure configurable to be installed at a work site. This structure is configured to allow a vehicle access to a platform when it has been installed and the structure is characterised in that it comprises pre-cast concrete.

The invention therefore provides a pre-cast concrete structure suitable for transportation to a work site and subsequent installation. This invention therefore uses concrete that as indicated previously is a cheaper but just as effective material than previous prior art steel structures. As the invention uses a pre-cast concrete structure the delays associated with the process of preparing the civil works, and allowing the onsite cast concrete to cure enough are removed allowing this entire operation to be accomplished much more quickly.

In addition to these specific advantages over the prior art the inventors also consider this invention to have a number of additional advantages. As the structure is pre-cast unit and is therefore a distinct entity which may be removed and repositioned as appropriate.

The inventors also consider it to be reusable, in other words recyclable from one job to another. Generally speaking the useful lifetime of such an object will be measured in decades and therefore as work upon a work site comes to a close the pre-cast concrete structure may be removed from its place and taken to a second work site for further use. This is not possible with onsite cast structures as they are too well sited to be easily removed and generally require demolition prior to removal from the work site.

The other advantage of the current invention is unlike structures which are cast onsite, these structures are pre-cast away from the site, and they have defined properties and characteristics and will react in a reproducible fashion giving the user of a such a structure greater certainty as to the usefulness of a structure on a given job of work.

Finally, as this pre-cast structure does not require the casting and curing of concrete on site the costs associated with the civil works necessary to put in place the necessary structures so to allow vehicles access to a platform, are significantly reduced.

Preferably this structure may be a ramp configurable to allow a vehicle to a platform which is raised above ground level.

As indicated previously in general, platforms situated on work sites are raised above ground level this is to allow the easy maintenance and general repair of the platform by allowing users easy access to the underside of the platform so preventing the build up of debris and other substances for instance water.

Preferably the concrete structure may comprise a base onto which the ramp may be affixable.

By providing a pre-cast concrete structure which comprises both a base and a ramp component, different combinations of base units and ramps with different combinations of dimensions and gradients of each allow a user of the structure to select a suitable combination of base and ramp component for their particular job.

Preferably a structure may comprise at least one internal hollow portion.

In order to reduce the weight of the structure it may comprise one or more hollow portions. These hollow portions can be formed into the structure whilst it is pre-cast away from the work site. By reducing the overall weight of the unit this increases the ease with which the structure may be positioned and repositioned as appropriate during its lifetime on the first work site and any subsequent work site to which it is moved.

Possibly the structure may comprise at lease one internal metal support.

By providing an internal metal support or frame of metal, this will support the structure and increase its structural rigidity, strength and other important mechanical properties allowing it to function in a range of different settings and with a greater range of vehicle sizes.

Preferably the structure may comprise concrete selected from one of the following types;
Aggregate concrete;
Fibrous concrete.

A great many types of concrete exist and modern forms of concrete, for instance those comprising an internal fibrous structure, offer increased structural rigidity and other mechanical properties in comparison to prior art concrete compositions. Such new forms of concrete may in many instances have significantly better properties than previous forms of concrete reinforced with metal supports. By providing a pre-cast structure made from one of these materials, the inventors provide a pre-cast structure which will be of reduced weight relative to the pre-cast structure which comprises a metal support structure in order to allow it to function.

Preferably the structure may comprise a material on the surface of the structure which contacts the vehicle, this material is configured to increase friction at the contact points between the surface and the vehicle so increasing the grip of the vehicle upon the structure and easing its passage.

By providing this type of material on top of the concrete structure, the possibility of the vehicle losing grip on the structure as it approaches or exits from the platform is reduced. This may be particularly important if a work site and conditions therein are muddy. In this instance the vehicle wheels will be caked in this mud and will have relatively less grip than it would otherwise have. This material may be in the form of a continuous layer on the vehicle contacting side of the structure or alternatively may be in a chevron pattern or any other suitable pattern thereon.

Preferably the structure may comprise at least one reinforced portion configurable to contact said platform.

By providing a reinforced portion in a pre-cast structure specifically configured to be positioned on a platform a contacting part of the structure, then any movement of the platform due to the entry or exit of a vehicle thereon, will not damage the structure due to these reinforcing plates.

The structure may be configured for use with a weightbridge.

As indicated previously the common form used on work sites is that of a weightbridge. Weightbridges perform a number of different functions on work sites and generally speaking any vehicle on the work site with material reclaimed therefrom will be weighed both on entering the work site and upon exiting it so as to determine a mass of material removed by vehicle during this operation. The calculation of the mass of material removed from a work site is important as a tractors operable or other material removal surfaces charge on a volume and weight basis and is therefore essential that both the contractor and their employer knows the volume of material which has removed from a work site.

Preferably this weightbridge may use loadcells.

Loadcells are measurement devices used in conjunction with weightbridges to determine the weight of vehicles or other loads present on the weightbridge.

Alternatively the structure may be configured for use with a wheel-washing platform. As indicated previously in addition to weightbridges being a common feature on work sites, wheel washing stations are also very common occurrences particular during the early stages of the work site when other civil works are being conducted and the condition on the site are particularly muddy. Under current UK legislation it is necessary for a vehicle exits a work site wheels to be cleaned of any dirt or debris there is not to pollute any road upon which the vehicle will travel from becoming polluted with this material.

Preferably said structure may be between 2,500mm and 5,500mm in width.

Preferably said structure may be between 2,000mm and 6,000mm in length.

Preferably a gradient of a ramp which forms a component of this structure may be in between 1 and 3 and 1 in 20.

Different work sites and specifically different vehicles have different dimensions and therefore different pre-cast structures are required for use upon specific work sites with specific structures for specific purposes.

Preferably a platform comprises at least one support member.

Preferably at least one support member may comprise pre-cast concrete.

Where a platform is of a significant length in general intermediate support structures will be required underneath the platform in order to prevent bowing of the platform due to the weight of the vehicle positionable thereon. Generally speaking edges of up to 8m to 9m in span require no such intermediate supporting structures. However bridges are between 10m and 15m in span generally require one support structure and bridges of 15m or more in span require 2 or more structures as appropriate.

Most preferably there may be provided a first structure positioned at a first end of the platform and a second structure positioned at a second end of the platform.

By providing both the first and second structure adjacent to either end of platform the invention may be configurable to allow a vehicle both entry and exit through this platform.

According to a second specific aspect of the present invention there is provided a weightbridge which comprises a platform configured to accept a vehicle. Positioned beneath this platform there is provided at least one load cell. This load cell plate being configured to record the weight of a vehicle, its contents and platform. This invention being characterised in that it comprises at least one pre-cast concrete structure configured to allow a vehicle access to this platform.

According to a third aspect of the present invention there is provided a wheel-washing unit comprising a platform configured to accept a vehicle. This wheel-washing unit is characterised in that it comprises at least one pre-cast concrete structure configured to allow access by a vehicle to this platform.

According to a fourth specific aspect of the present invention there is provided a method of installing a pre-cast concrete structure configurable to allow a vehicle access to a platform. This method comprises the steps of:
Excavating of pit configured to accept the pre-cast structure;
Filling the pit with hardcore to form a stable surface onto which said pre-cast structure may be placed;
Placement of the structure onto the stable surface;
Adjustment of the platform into an operable position relative to the structure.

According to a fifth specific aspect of the present invention there is provided a method of re-positioning a pre-cast concrete structure. This repositioned pre-cast concrete structure is configurable to allow a vehicle access to a platform on a work site. This method comprises the steps of:
Extraction of a the pre-cast structure;
Excavation of a pit configured to accept the pre-cast structure;
Lining of said pit with hardcore so as to form a stable surface;
Placement of the structure onto the surface;
Placement of the platform into an operable position relative to the structure.

### Brief Description of the Drawings

For a better understanding of the invention and to show how the same may be carried into effect, there will now be described by way of example only, specific embodiments, methods and processes according to the present invention with reference to the accompanying drawings in which:
Figure 1 herein shows a perspective view of pre-cast concrete structure according to a first specific embodiment of the present invention.
Figure 2 herein shows a perspective view of a pre-cast concrete structure according to a second specific aspect of the present invention.
Figure 3 herein shows a side perspective view of a weightbridge according to a third specific embodiment of the present invention.
Figure 4 herein shows a cut through view of a pre-cast concrete structure according to a fourth specific embodiment of the present invention.
Figure 5 herein shows a wheel washing unit according to a fifth specific embodiment of the present invention

### Detailed Description

There will now be described by way of example a specific mode contemplated by the inventors. In the following description numerous specific details are set forth in order to provide a thorough understanding. It will be apparent however, to one skilled in the art, that the present invention may be practiced without limitation to these specific details. In other instances, well known methods and structures have not been described in detail so as not to unnecessarily obscure the description.

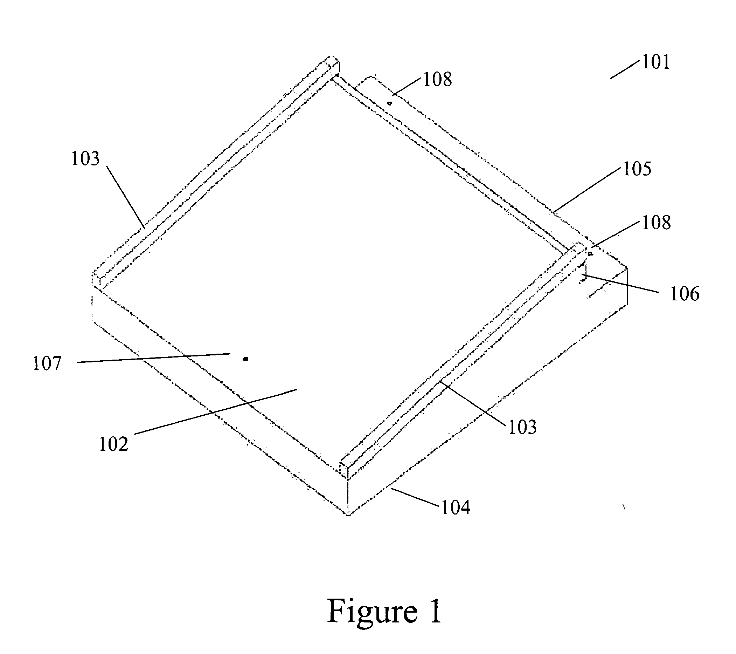

With reference to Figure 1 herein there is shown a first specific embodiment of the present invention. According to this first specific embodiment of the present invention there is provided a concrete pre-cast structure 101. This concrete pre-cast structure comprises a vehicle contacting surface on an upper side thereof. This vehicle contacting surface 102 is edged on opposing sides by side curbs 103. These side curbs are configured to prevent a vehicle wheel edge upon the vehicle contacting surface from falling off of the vehicle contacting surface 102 whilst the vehicle is upon the pre-cast concrete structure 101.

This pre-cast concrete structure 101 further comprises a lower surface 104. This lower surface 104 is configured when the pre-cast concrete structure 101 has been installed to be in contact with a surface of a pit into which the pre-cast concrete structure 101 has been placed. According to this specific embodiment of the present invention the vehicle contacting surface 102 is offset relative to the lower surface 104 of the pre-cast concrete structure. By being offset in this way the vehicle contacting surface forms a ramp and allows a vehicle to a send to a platform or other structure with which the pre-cast concrete structure is operably engaged.

This pre-cast concrete structure 101 further comprises a platform-accepting portion 105. According to this specific embodiment of the present invention this platform accepting portion 105 is positioned at an end of the pre-cast concrete structure where the vehicle contacting surface is furthest away from the lowest surface 104 of the pre-cast concrete structure. According to this specific embodiment of the present invention this platform accepting portion 105 forms a surface on the pre-cast concrete structure which is parallel with the lower surface 104 of the pre-cast concrete structure 101 but disposed at a distance part therefrom.

The pre-cast concrete structure 101 further comprises a reinforced portion 106. This reinforced portion 106 is formed into surface of the pre-cast concrete structure which is disposed at a 90° angle relative to the platform accepting portion 105 of the pre-cast concrete structure 101. This reinforced portion is configured such that when a platform has been positioned onto a platform accepting portion of the pre-cast concrete structure, if this platform moves relative to the pre-cast concrete structure and particularly moves against the pre-cast concrete structure, this reinforced portion prevents damage occurring to the pre-cast concrete structure.

According to this specific embodiment of the present invention this reinforced portion is in the form of a steel plate and specifically a C shaped steel box section configured such the first surface of this section is at the upper most periphery of the ramp, a second surface forms a portion of the ramp exposed where the platform accepting portion is located so forming the reinforcing plate and a final section inside of the structure of a similar dimension to the first surface, so increasing the structural rigidity and strength of the pre-cast structure as a whole and the reinforced region specifically.

Pre-cast concrete structure 101 also comprises a lifting eye 107. This lifting eye 107 is formed into the vehicle contacting surface102 of the pre-cast concrete structure 101. The lifting eye 107 allows the pre-cast concrete structure 101to be connected to a mechanical winch or lifting arm so as to ease transfer of the pre-cast concrete structure from the transporting vehicle to the pit configured to receive the pre-cast concrete structure101 or alternatively to reposition the pre-cast concrete structure relative to the platform or other component as may be necessary.

The pre-cast concrete structure 101 and specifically the platform accepting portion 105 thereof, also comprise a first and a second load cell foundation bolt. According to this first specific embodiment of the present invention, this pre-cast concrete structure 101 is configured for use as the entry point for a weightbridge. Therefore load cells will need to be fitted between the platform and platform accepting portion 105 of the concrete structure 101. In addition to this pre-cast concrete structure being suitable for use as a component of a weightbridge it may also be used with a wheel washing station, in this instance the load cell foundation bolt holes would not be used for this purpose. In any event according to this specific embodiment of the present invention these load cell foundation bolts as well as locating a load cell therein may also function as additional lifting eyes increasing the ease with which the pre-cast concrete structure can be moved a transportation vehicle or repositioned.

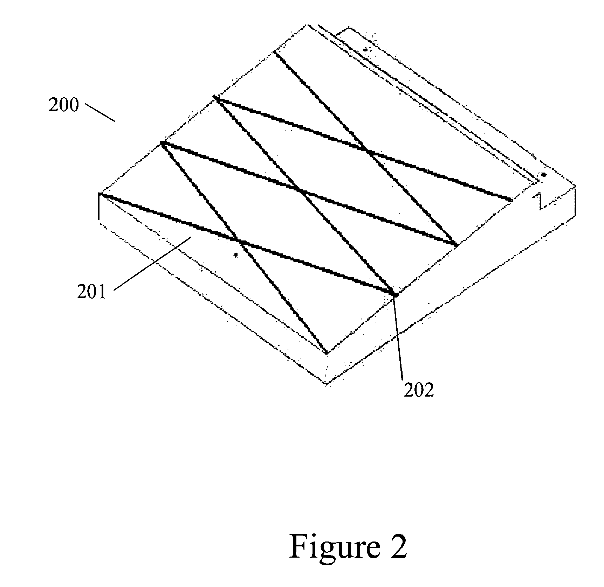

With reference to figure 2 herein there is shown a second specific embodiment of the present invention. There is again provided a pre-cast concrete structure 200 which is substantially identical to the previously described pre-cast concrete structure 101. This second type of pre-cast concrete structure further comprises a material upon the vehicle contacting surface 201 which is configured to increase the friction between the parts of the vehicle which are in contact with the sides of the vehicle as it traverses the structure. This grippable surface 202 is according to this specific embodiment of the present invention arranged in a criss-cross lined pattern upon the vehicle contacting surface 201. This grippable surface 202 may comprise a number of different materials. In particular, a series of metal bars slightly raised with respect to the vehicle contacting surface, which increase the grip of a vehicle upon the vehicle upon a vehicle contacting surface. Alternatively tar, pitch or other hard setting but elastic substances may also be used, particularly if they are mixed with abrasive materials to further increase the grip of vehicle tires the vehicle contacting surface of the pre cast concrete structure.

The grippable surface may be designed to provide visual or other guides to the user allowing them access the platform more easily. For instance a number of parallel arranged ridges may be formed onto the vehicle contacting surface, then the driver of a vehicle would then know if they were upon such surfaces given the vibrations which would result from the vehicle passing there over. Such marking would also act as a deterrent to exceeding the recommended speed upon the structure, another way to accomplish this would be to provide speed bumps upon the vehicle contacting surface.

Alternatively the grippable surface may be in the form of an arrow or other indicative structure/symbol, allowing a driver to understand quickly the preferred method of ascending or descending the vehicle contacting surface.

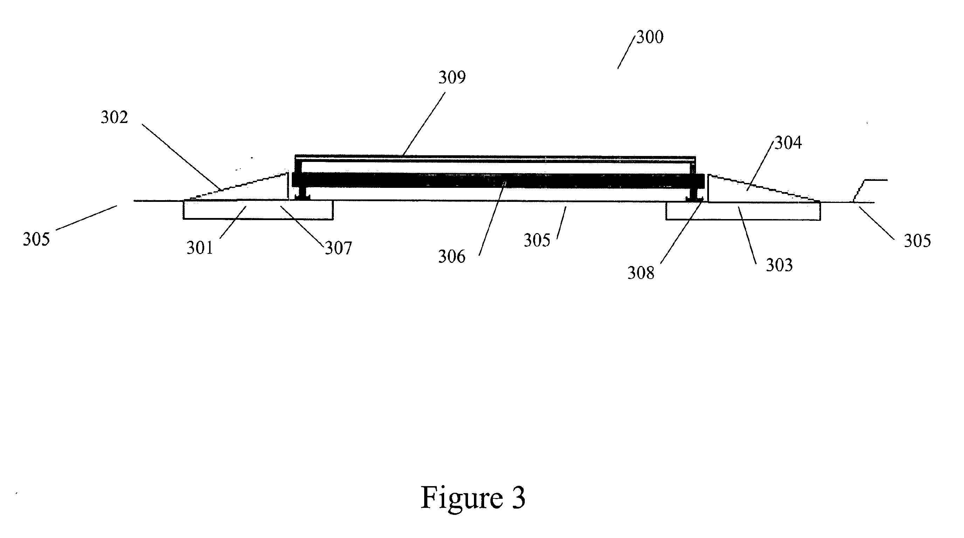

With reference to figure 3 herein there is shown a third specific embodiment of the present invention. There is shown a first pre-cast base structure 301, positioned on top of this is a first pre-cast ramp structure 302. Both the first and second pre-cast structures 301 and 302 respectively are made from concrete.

This embodiment also comprises a second pre-cast base structure 303 and positioned on top of this a second pre-cast ramp 304. Both the third and fourth pre-cast structures 303 and 304 respectively are made from concrete.

With reference to figure 3 herein there is also shown the ground level 305. This ground level 305 represents the surface of the earth where this weightbridge 300 has been positioned. With reference to figure 3 herein the first and second pre-cast base structures 301 and 303 respectively, positioned such that the surface of these pre-cast base structures when they are in an operable position are substantially contiguous with the ground level. This means that the entirety of the first and second pre-cast base structures are hidden from view.

Further according to this specific embodiment the first and second pre-cast ramp structures which are positioned on top of the first and second pre-cast base structures, and a lower surface thereof is substantially continuous with ground level. A vehicle approaching on the ground to the first or second pre-cast ramp structure experiences no transition from the ground level onto the first or second pre-cast ramp structure.

The weightbridge 300 also comprises of a platform 306. This platform 306 spans the distance between at first pre-cast base/ramp structure and the second pre-cast base/ramp structure. This platform is configured to accept the vehicle that together with its contents is to be weighed by the weightbridge 300. In general such platforms 306 are made from steel beams enclosed in a resistant cover. This is because the platform needs to be strong and relatively light to function in this instance.

The platform 306 is all properly connected to the first and second pre-cast base structures 301 and 303 respectively via first and second loads cells 307 and 308 respectively. The load cells calculate the weight of the vehicle and its contents whilst it is on the weightbridge.

A platform also comprises retaining bars 309. These retaining bars are configured to prevent the vehicle from falling from one side of the platform either as the vehicle enters the platform, the vehicle reverses the platform or alternatively as the vehicle is exiting the platform so preventing damage to the platform, weightbridge and the vehicle and its contents.

According to the specific embodiment of the present invention the platform 306 is formed from heavy duty longitudinal beams which are layered between upper and lower depth plates ensuring protection of the beams and not compromising the strength of these beams.

This type of platform forms an incredibly strong box section super structure known as monocoque technique as used in suspension bridges. The end plates may then be fully sealed to prevent penetration of corrosion agents into the more delicate internal beams. Anti corrosion paint or optionally ICI waxoyl is then applied to fully protect the weightbridge against corrosion.

The platform may be pre-assembled with load cells or load bars to allow the delivery offloading and installation. Alternatively the platform may be provided with preinstalled plinths or base unit to allow instant use of the weightbridge, once the pre-cast first and second ramp structures have been operabley placed relative to the first and second pre-cast base units and the platform.

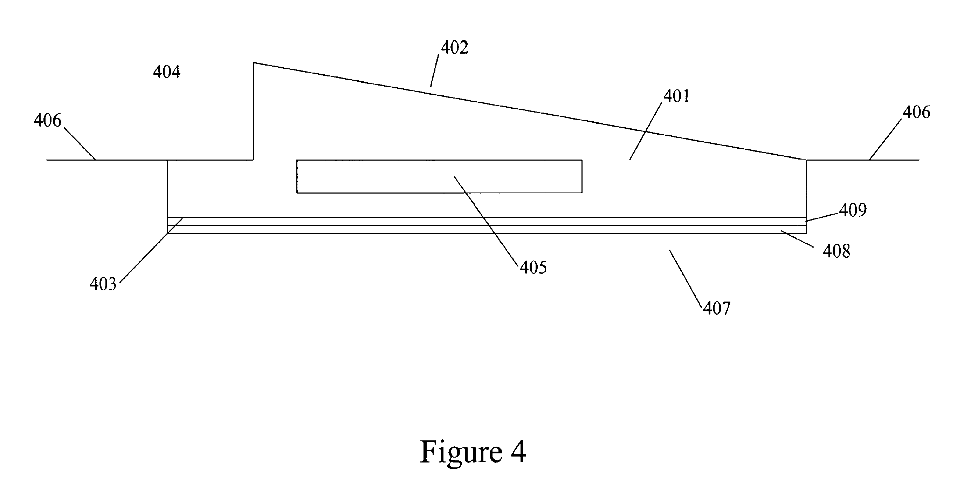

With reference to figure 4 herein there is shown a cross sectional view of a pre-cast concrete structure according to any previous embodiment of the present invention. This pre-cast concrete structure 401 again comprises a vehicle contacting service 402. This vehicle contact surface set relative to a lower surface 403 of the pre-cast concrete structure so as to form a ramp. As explained in previous embodiments of the previous embodiments of the present invention this pre-cast concrete structure 401 may be a single piece of alternatively may comprise two portions a base portion and a ramp portion.

The pre-cast concrete structure further comprises a platform accepting portion 404, this platform accepting portion being configured to accept an end of platform with which the pre-cast concrete structure is configured for use.

In addition this pre-cast concrete structure 401 also comprises a hollow region contained within the pre-case concrete structure 401 and formed at the time of casting of this structure. This hollow region must not effect significantly the structural integrity or mechanical properties of the pre-cast concrete structure 401. However it will significantly reduce the overall weight of the pre-cast concrete structure so reducing transportation costs and increasing the ease with which the cast concrete structure 401 can be repositioned at a work site or alternatively removed or repositioned as appropriate.

With reference to figure 4 herein the pre-cast concrete structure 401 has been positioned in the ground and surface 406 is shown to be contiguous with a lower portion of the vehicle contacting surface 401 and a platform accepting portion 404. The pre-cast concrete structure has been placed into a pre-dug pit 407. This pit is of a dimension substantially identical to that of the length and width of the pre-cast concrete structure 401. This pit can be dug prior to the pre-cast concrete structure coming to a work site so increasing speed with which the pre-cast concrete structure can be installed on a work site and operation platform operable connected to the pre-cast concrete structure can commence.

This pit 407, is lined with a first layer of gravel or hardcore. This first layer of gravel or hardcore forms a hard durable surface onto which additional layers and the pre-cast concrete structure may be placed. The gravel/hardcore layer is as far as possible level. Onto this layer of gravel/hardcore 408 is then placed a layer of sand 409. Because sand has a particle size than hardcore or gravel it is important you get the surface of this sand layer 409 substantially level. Once this substantially level sand layer has been constructed, the pre-cast concrete structure is then lowered onto this surface . As the footprint of the pre-cast concrete structure is large it is relatively stable from the gravel/hardcore layer and upper sand layer.

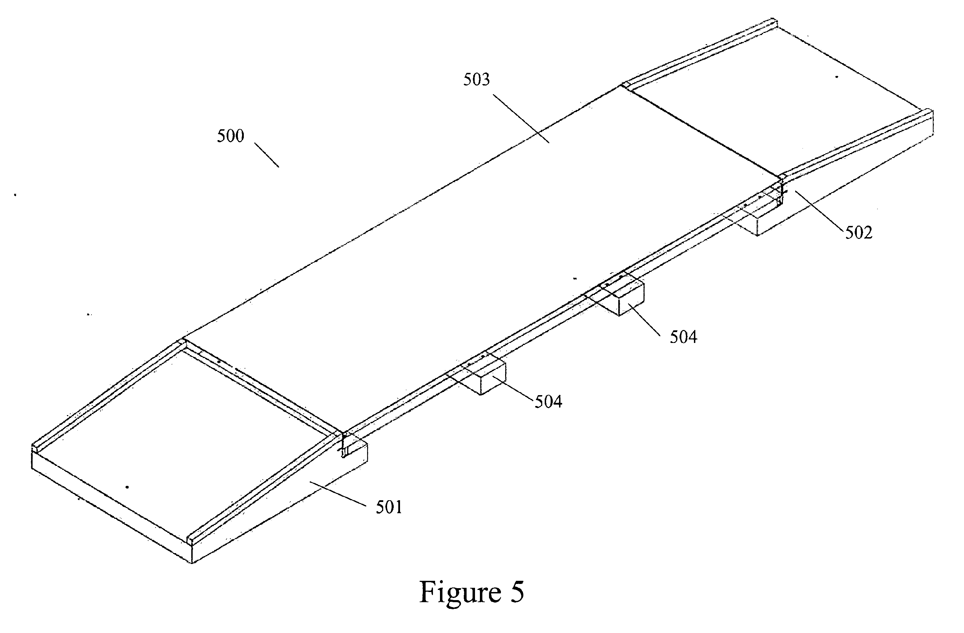

With reference to figure 5 herein there is shown a further specific embodiment of the present invention. Figure 5 shows a wheel wash station 500. This wheel wash station comprises a first and second pre-cast concrete structure 501 and 502 respectively. These pre-cast concrete structures 501 and 502 respectively are formed at either end of the platform 503. The span of this platform would allow a platform to support a vehicle without suffering inappropriate bending a number of pre-cast support structure are also provided and positioned underneath the platform.

According to this specific embodiment of the present invention there are provided two such pre-cast support structures 504 and 505 respectively. These pre-cast concrete structures may be delivered to the works site as separate units from the other components of this wheel washing station 500. Alternatively the A cast support structures may be pre-attached to the platform 503 so as to decrease the amount of time necessary to install the form into an operable configuration with the first and second pre-cast structures. In an overall alternative the first and second support structures 504 and 505 respectively may be pre-joined with the first and second pre-cast concrete structures again so as to decease the amount of time necessary to finalise the installation of the wheel washing 500. Support structures may be connected to the pre-cast structures 501 and 502 either by pieces of metal or alternatively by concrete structure all cast at the same time from the work site.

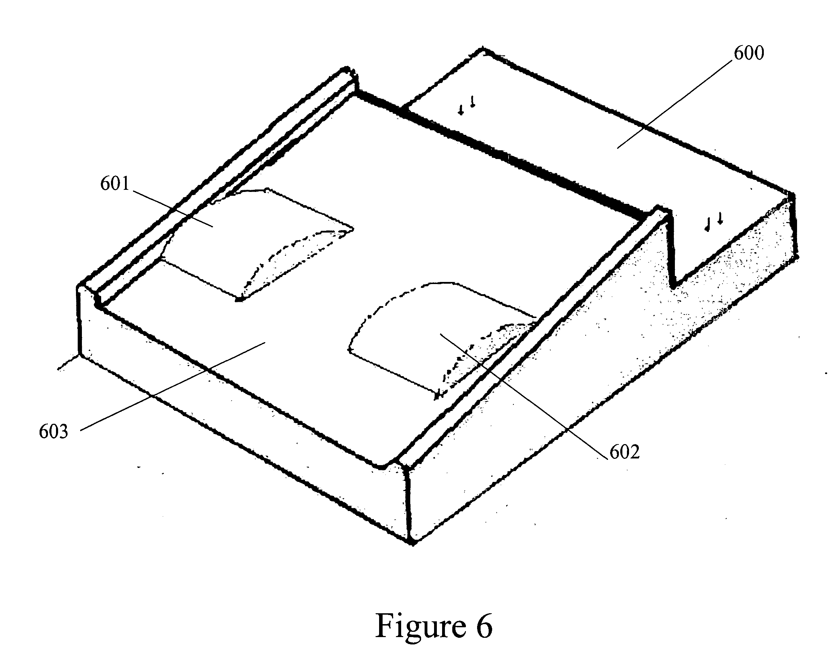

With reference to figure 6 herein and according to a sixth embodiment of the present invention there is provided a pre-cast concrete structure 600. This pre-cast structure 600, is identical to the first embodiment described herein. In addition it also comprises two speed bumps 601 and 602, formed onto oppositely spaced portions of the vehicle contacting surface 603. These speed bumps are in the form of substantially semi-circular protrusions from the surface 603. They are positioned such that when a vehicle traverses the surface 603, its wheels contact these portions 601 and 602. If the vehicle is travelling at a speed in excess of the recommended maximum, this will result in a uncomfortable jolt, causing the driver to slow and preventing accidents on the structure 600.

These speed bumps may be in the form of a continuous raised portion across the width of the surface 603 or one or more discreet protrusions as per figure 6. The speed bumps are configured to be demountable form the structure and also adjustable upon this structure from the lower to upper portion thereof.

The speed bumps may comprise a wide range of materials and in particular laminated metals/concrete and metal speed bumps are considered best.

The following dimensions may be applied to any of the embodiments previously discussed in this patent specification. In general the pre-cast structure may be between 2500 millimetres and 5500 millimetres in width. At the present time the average European size for a weighbridge is between 3000 to 4000 millimetres in width.

A pre-cast concrete structure may be between 2000 millimetres and 6000 millimetres in length. At the present time the inventors consider A cast concrete structures of 3500 millimetres to be the best size.

The gradient at present in the pre-cast concrete structure would generally be between one in three and one in twenty. At the present time where the ramp is providing for access a weightbridge of wheel wash station the gradient of such a ramp is approximately 1 in 10.

## Claims

1. A structure configurable to be installed at a work site;
wherein said structure is configured to allow a vehicle access to a platform when installed; and
wherein said structure is **characterised in that** it comprises pre-cast concrete.

2. A structure as claimed in claim 1, wherein said structure is a ramp configured to allow access to a platform raised above ground level.

3. A structure as claimed in claim 2, wherein said structure comprises a base onto which said ramp is affixable.

4. A structure as claimed in any preceding claim wherein said structure comprises at least one internal hollow portion.

5. A structure as claimed in any preceding claim wherein said structure comprises at least one internal metal support.

6. A structure as claimed in any preceding claim wherein said structure comprises concrete selected from the following types:
fibrous concrete;
aggregate concrete.

7. A structure as claimed in any preceding claim wherein a structure comprises curving means configured to retain said vehicle on said structure.

8. A structure as claimed in any preceding claim wherein said structure comprises a material on its vehicle contacting surface which is configured to increase friction at the contact points between said surface and said vehicle.

9. A structure as claimed in any preceding claim wherein said structure comprises at least one reinforced portion configurable to contact said platform.

10. A structure as claimed in any preceding claim wherein said structure is configured for use with a weightbridge.

11. A structure as claimed in claim 10 wherein said weightbridge uses load cell plates.

12. A structure as claimed in any one of claims 1 to 9, wherein said structure is configured for use with a wheel washing platform.

13. A structure as claimed in any preceding claim wherein said structure is between 2,500mm and 5,500mm in width.

14. A structure as claimed in any preceding claim wherein said structure is between 2,000mm and 6,000mm in length.

15. A structure as claimed in any one of claims 2 to 14 wherein a gradient of said ramp is between 1:3 and 1:20.

16. A structure as claimed in any preceding claim wherein said platform comprises at least one support member.

17. A structure as claimed in claim 16, wherein said at least one support member comprise pre-cast concrete.

18. A structure as claimed in any preceding claim wherein first said structure is positioned at a first end of said platform and a second said structure is positioned at a second end of said platform.

19. A structure as claimed in any preceding claim, wherein said structure comprises at least one speed bump.

20. A weightbridge, comprising:
a platform configured to accept a vehicle;
at least one load cell plate positioned beneath said platform and configured to record the weight of said vehicle;
**characterised in that** it comprises at least one pre-cast concrete structure, configured to allow a vehicle to access said platform.

21. A wheel washing unit, comprising:
a platform configured to accept a vehicle;
**characterised in that** it comprises at least one pre-cast concrete structure configured to allow said vehicle access.

22. A pre-cast concrete structure comprising:
a body having an upper surface and a lower surface;
**characterised in that** said upper surface is inclined relative to said lower surface; and
such that in use said upper surface is substantially continuous with ground level and is configured to allow a vehicle access to a platform; and
a second lower surface configured to rest below ground level; and
a cut out portion of said structure is configured to receive an end of said platform.

23. A method of installing a pre-cast concrete structure configurable to allow a vehicle access to a platform, comprising the steps:
excavation of a pit configured to accept said structure;
lining of said pit with hard core to form a stable surface;
placement of said structure onto said surface;
placement of said platform into an operable position relative to said structure.

24. A method of repositioning an in situ pre-cast concrete structure which is configurable to allow a vehicle access to a platform on a work site, comprising the steps:
extraction of said in situ structure;
excavation of a pit configured to accept said structure;
lining of said pit with hard core;
placement of said structure onto said surface;
placement of said platform to an operable position relative to said structure.
